**Europäisches Patentamt**

(19) **European Patent Office**

**Office européen des brevets**

(11) Veröffentlichungsnummer: **0 029 095**
**B 1**

(12) **EUROPÄISCHE PATENTSCHRIFT**

(45) Veröffentlichungstag der Patentschrift:
**09.11.83**

(51) Int. Cl.³: **A 23 N 17/02,** B 01 F 7/04

(21) Anmeldenummer: **80105400.8**

(22) Anmeldetag: **10.09.80**

(54) **Verfahren und Vorrichtung zum Mischen von insbesondere klumpenbildenden Mischungen.**

(30) Priorität: **18.09.79 DE 2937637**

(43) Veröffentlichungstag der Anmeldung:
**27.05.81 Patentblatt 81/21**

(45) Bekanntmachung des Hinweises auf die Patenterteilung:
**09.11.83 Patentblatt 83/45**

(84) Benannte Vertragsstaaten:
**BE FR GB IT NL**

(56) Entgegenhaltungen:
**BE - A - 522 136**
**CH - B - 464 150**
**DE - B - 1 278 408**
**DE - B - 1 279 416**
**FR - A - 2 288 547**
**FR - A - 2 446 074**
**GB - A - 565 948**
**US - A - 3 250 321**
**US - A - 3 638 920**

(73) Patentinhaber: **Hoopman Onderzoek en Ontwikkeling B.V., Dinxperlosestraatweg 88, NL-Ijzerlo gem. Aalten (NL)**

(72) Erfinder: **Hoopman, Abraham, Dinxperlosestraatweg 88, NL-Ijzerlo gem. Aalten (NL)**

(74) Vertreter: **Schulze Horn, Stefan, Dipl.-Ing. et al, Patentanwälte Dipl.-Ing. S. Schulze Horn M.SC. Dr. H. Hoffmeister Goldstrasse 36, D-4400 Münster (DE)**

## Verfahren und Vorrichtung zum Mischen von insbesondere klumpenbildenden Mischungen

Die Erfindung betrifft ein Verfahren zum Mischen für insbesondere zähes, zur Klumpenbildung neigendes Mischgut in einem Mischtrog, in welchem ein Mischorgan mit horizontaler Achse umläuft, wobei das Mischgut unter Schwerkrafteinfluß in einen mit dem Mischtrog annähernd parallel und der Länge nach in Verbindung stehenden Trog einer mit dem Mischorgan zusammenwirkenden Schnecke eingetragen wird, die eine im wesentlichen axiale Förderung des eingetragenen Gutes bewirkt, worauf das Gut am Ende der Förderung erneut in den Mischbereich eingetragen wird, und die Schnecke nach Beendigung des Mischvorganges die fertige Mischung aus dem Mischtrog herausfördert.

Die Erfindung betrifft weiter eine Vorrichtung zur Durchführung des Mischverfahrens.

In der Landwirtschaft hat es sich in jüngster Zeit als vorteilhaft erwiesen, Mais nicht zur Zeit der Reife zu ernten, sondern zu einem Zeitpunkt vor dem Reifezeitpunkt, wenn der Eiweißgehalt am höchsten ist. Aufgrund der erhöhten Eiweißgehalte ist silierter Mais dann ein besonders ergiebiges Kraftfutter für alle Arten von Mastvieh.

Der vor der eigentlichen Reife geerntete, gemahlene und/oder geschrotete Mais — wobei die Kolben als Ganzes verarbeitet werden und dessen Feuchtigkeitsgehalt bei ca. 40% liegt — wird in Fachkreisen allgemein als »Corn Cob« bezeichnet.

Vor dem Verfüttern wird dem Corn Cob u. a. Getreide, Eiweiß-Konzentrat sowie Mineralstoff hinzugemischt. Das so aufbereitete, zum Verfüttern fertige Gemisch ist unter der Bezeichnung »Corn Cob Mix« bekannt.

Für die Mischung ist es von besonderer Bedeutung, eine vollkommen homogene Mischung zu erhalten, da sonst nicht nur einige der Futterempfänger bestimmte Stoffe in zu geringer Konzentration bekämen, sondern insbesondere die Konzentration bestimmter Stoffe für junge und/oder empfindliche Tiere wie Kälber, Jungschweine und Säue, gefährlich sein kann.

Es hat sich als ausgesprochen schwierig herausgestellt, daß die zum Verklumpen neigende Mischung aus den vorgenannten Stoffen, die im Durchschnitt 50 bis 80% Corn Cob oder geschrotete bzw. gemahlene Maiskörner enthält, mit bekannten Mischern nur unzulänglich bzw. überhaupt nicht oder nicht wirtschaftlich gemischt werden kann.

Dies ist einer der Hauptgründe weshalb sich die ansonsten sehr vorteilhafte Verfütterung von Corn-Cob-Mix bisher nicht genügend in der Futtermast durchsetzen konnte.

Zwar sind bereits Mischer bekannt, die entweder mit Mischtrommeln arbeiten oder in denen Schnecken zur Bereitung der Mischung angeordnet sind. Jedoch hat sich herausgestellt, daß diese für die Mischung der vorgenannten Stoffe nur unzureichend arbeiten und insbesondere eine ausreichende homogene Mischung damit nicht herstellbar ist.

So ist beispielsweise aus der Patentschrift BE-A-522 136 ein Mischer zur Herstellung einer Futtermischung bekannt, mit einem der Vorrichtung nach der Erfindung gattungsähnlichen Aufbau, umfassend einen Mischtrog mit horizontaler Achse und einem darin mit horizontaler Welle umlaufenden Mischwerkzeug, wobei der Bodenbereich des Mischtroges über eine annähernd dessen gesamte Länge durchsetzende Öffnung mit dem Trog einer zum Mischertrog parallelen Schnecke in Verbindung steht.

Im Gegensatz zur Aufgabenstellung der vorliegenden Erfindung dient jedoch der bekannte Koch-Mischer zur Erzeugung eines gargekochten Futterbreies von wäßrig-suppenartiger Konsistenz, welche abweichend vom Verhalten der zu Klumpenbildung neigenden halbtrockenen und klebenden, schwer zu bewegenden Konsistenz der Komponenten einer Corn-Cob-Mix-Mischung eine sehr leicht rührbare und demgemäß mischbare Masse ergibt. Der bekannte Mischer hat dementsprechend mit paddelartigen Rührflügeln besetzte Mischorgane, welche den gesamten Inhalt des Mischtroges mehr oder minder gleichmäßig in Bewegung setzen.

Dies führt bei einem der Erfindung zugrundeliegenden Mischgut zur Ausbildung eines einzigen Haufwerkklumpens, der — wenn überhaupt bewegbar — ungemischt im Trog rotiert. Der bekannte Mischer ist für die Bewältigung des zur Lösung mit der Erfindung anstehenden besonders gelagerten Mischproblems total ungeeignet.

Es ist weiterhin aus der US-A-3 638 920 eine Mischvorrichtung bekannt, umfassend ebenfalls einen horizontal angeordneten Mischtrog mit einem kreisförmigen Bodenbereich, der von Rührflügeln eines an einer horizontalen Welle angeordneten Mischwerkzeuges bestrichen wird. Der Mischertrog ist nach oben zu V-förmig erweitert und weist in diesem Bereich, nahe der oberen Öffnung des Troges, je rechts und links eine zur Welle des Mischorganes parallel angeordnete Schnecke auf. Diese haben die Aufgabe, das Mischgut in eine axiale Umlaufbewegung und in den Agitationsbereich des zentralen Mischorgans zu bewegen.

Zum Mischen eines zur Klumpenbildung neigenden Gutes wie Corn-Cob-Mix wäre ein so gearteter Mischapparat noch weniger geeignet als der vorgängig erwähnte, da die Vielzahl der mit dem Gut in Einwirkung stehenden Misch- und/oder Rührflächen eine Umwälzung des gesamten Troginhaltes zur Folge haben würden, ohne jedoch diesen zu mischen.

Der bekannte Mischer ist im Gegenteil zum anstehenden Mischproblem ausgesprochen nur für leicht bewegbare flüssige oder rieselfähige Gutsorten brauchbar.

Der Erfindung liegt die ganz spezielle Aufgabenstellung zugrunde, ein Mischverfahren und eine hierfür geeignete Mischvorrichtung zur Verfügung zu stellen, mit welchen es insbesondere gelingt, aus den relativ trockenen, zum Verkleben und zur Verklumpung neigenden Komponenten einer insbesondere Corn-Cob-Mix-Mischung eine homogene Mischung herzustellen. Da es sich um ein insbesondere unter den Betriebsbedingungen der Landwirtschaft einzusetzendes Gerät handelt, soll dementsprechend die perfekte Mischung mit einem einfach aufgebauten, leicht transportablen, zuverlässigen und bezüglich Kraftbedarf besonders ökonomischen Mischer erzielt werden, der sich auch für andere im bäuerlichen Betriebssektor vorkommende Mischaufgaben universell verwenden läßt.

Die Lösung der gestellten Aufgabe gelingt mit dem Verfahren nach der Erfindung dadurch, daß von dem annähernd in einer Ruhelage befindlichen Mischgut jeweils nur eine wandnahe, äußere Schicht geringer Dicke im unteren Bereich des Mischtroges auf einer kreisförmigen Bahn mittels eines messerartigen Streifens bewegt, abgeschält und in den Trog der Schnecke eingetragen wird, wobei jeweils sich in Ruhelage befindliches Mischgut in den vom abgescherten Mischgut frei gewordenen Bereich absinkt.

Das erfindungsgemäße Mischverfahren hat den Vorteil, daß durch die sequentielle Einwirkung auf jeweils nur einen geringen Teil der Masse des Mischgutes sehr vorteilhaft eine Begrenzung der Energieaufnahme für die Rotation der messerartigen Streifen und andererseits eine sehr intensive Bewegung und Mischung des jeweils erfaßten Gutanteiles erfolgt. Indem die Masse des Mischgutes Schicht für Schicht abtragen und in den Mischerbereich recirkuliert wird, ergibt sich eine für den Fachmann überraschend intensive und wirkungsvolle Misch- und Zerkleinerungsarbeit. Dadurch gelingt es, entsprechend der Aufgabenstellung die zum Verkleben und Verklumpen neigenden Komponenten einer besonderen Futtermischung homogen zu mischen, wobei der Mischvorgang ohne übermäßige Krafteinleitung möglich gemacht wird. Damit wird weiter vorteilhaft verhindert, daß sich beim Mischvorgang die im Trog befindliche Masse des Mischgutes mitdreht und damit die Mischwirkung verhindert. Durch die Begrenzung der Mischarbeit jeweils nur auf eine Teilmenge des Gutes wird diese Teilmenge um so intensiver bearbeitet, und es wird gewährleistet, daß sucessive alle Teile der zu mischenden Masse erfaßt und in Mischung gebracht werden.

Dabei wirkt sich mit besonderem Vorteil aus, daß in Ausgestaltung des Verfahrens das in den Trog der Schnecke eingetragene Gut beim Mischvorgang in Richtung auf das im Mischtrog befindliche Ende der Schnecke gefördert und dort in den Mischerbereich ausgeworfen wird.

Die damit bewirkte intensive Recirkulationsbewegung der einzelnen Gutteile gewährleisten letztendes eine intensive Gesamtmischung, bei welcher kein Teil des Mischgutes ungemischt bleibt.

Dabei kann auch mit Vorteil von der Maßnahme gebrauch gemacht sein, daß das in den Trog der Schnecke eingetragene Gut während des Mischvorganges durch die Schnecke laufend aus dem Mischgut herausgefördert wird und daß das herausgeförderte Gut gehoben und von oben wieder in den Mischtrog eingefüllt wird.

Die Aufgabe wird weiterhin erfindungsgemäß durch eine entsprechende Vorrichtung umfassend einen Mischtrog und ein darin mit horizontaler Achse umlaufendes Mischorgan, wobei der Bodenbereich des Mischtroges eine über seine Länge verlaufende Öffnung aufweist, durch die der Mischtrog mit einer zu diesem parallel angeordneten Förderschnecke in Verbindung steht, dadurch gelöst, daß das Mischorgan im wesentlichen aus messerartigen schmalen Streifen zum Abscheren wandnaher äußerer Schichten gebildet wird, die in Richtung annähernd parallel zur Achse des Mischtroges oder in einer geringen Schrägstellung zu dieser angeordnet sind, und daß an der Schnecke oder zusätzlich zu dieser Mittel vorgesehen sind, die das Mischgut nach Förderung zum Ende der Schnecke aus dem Schneckentrog in den Mischertrog zurückfördern.

Zur Verbesserung der Mischwirkung ist die Ausgestaltung vorteilhaft, derart, daß die messerartigen Streifen gegenüber einer Mantellinie eines bei ihrer Rotation um die Welle beschriebenen Zylindermantels um einen Winkel $\alpha$ angestellt sind und in ihrer Längserstreckung gegenüber der Längsachse des Mischtroges eine Schrägstellung um einen Winkel $\beta$ aufweisen.

Da es ein erfindungswesentliches Prinzip des Verfahrens bzw. der Vorrichtung darstellt, daß die zu mischende Masse des Gutes nicht mit den messerartigen Streifen mitrotiert, gleichwohl aber in dem Bereich der Streifen eine kontinuierliche Wirkung erzielt wird, ist in Ausgestaltung der Vorrichtung vorgesehen, daß jeweils gleichartig angeordnete messerartige Streifen eines Abschnittes um 120° gegeneinander versetzt angeordnet sind. Der Versatz der Streifen ist dabei von dem Durchmesser des Mischorganes und der Anzahl der Streifen abhängig.

Zur ebenfalls erfindungswesentlichen Verminderung der Energieaufnahme beim Mischvorgang ist weiterhin die Ausgestaltung vorgesehen, daß die messerartigen Streifen an ihrer in Drehrichtung vorderen Kante eine Abschrägung aufweisen, die eine Schneidkante bildend von innen nach vorn außen verläuft.

Weiter hat es sich als vorteilhaft erwiesen, daß die Öffnung zwischen dem Mischtrog und dem Trog der Schnecke um ca. 30° in Drehrichtung der messerartigen Streifen gegenüber der vertikalen Projektion der Welle versetzt ist.

Eine Schneidwirkung für Teile des Gutes, die erst noch zerkleinert werden müssen, wie Rübenschnitzel und ähnliches wird vorteilhaft eine Schneidwirkung dadurch erzielt, daß an der in Drehrichtung der messerartigen Streifen hintenliegenden Kante der Öffnung eine messerförmige Riffel- oder Schlagleiste angeordnet ist.

Weiterhin vorteilhaft kann der Antrieb der Schnecke ein Wendegetriebe zur Drehrichtungsumsteuerung aufweisen, und ferner kann das im Mischtrog befindliche Ende der Schnecke eine Auswurfplatte aufweisen, die vorzugsweise den letzten halben Schneckengang abdeckt.

Dadurch wird mit Vorteil gewährleistet, daß bei der Bewegung der Schnecke in einer Drehrichtung das im Schneckenbereich vorhandene Gut in den Mischbereich zurückgefördert wird und dort der erforderlichen Mischbewegung unterworfen wird, wobei die Auswurfplatte den Auswurf für dieses Material übernimmt, und daß bei Drehrichtungsumkehr in üblicher Weise eine Entleerung der Mischtrommel vorgenommen werden kann.

Im folgenden wird ein Ausführungsbeispiel der Erfindung an Hand von Zeichnungen näher erläutert. Es zeigt

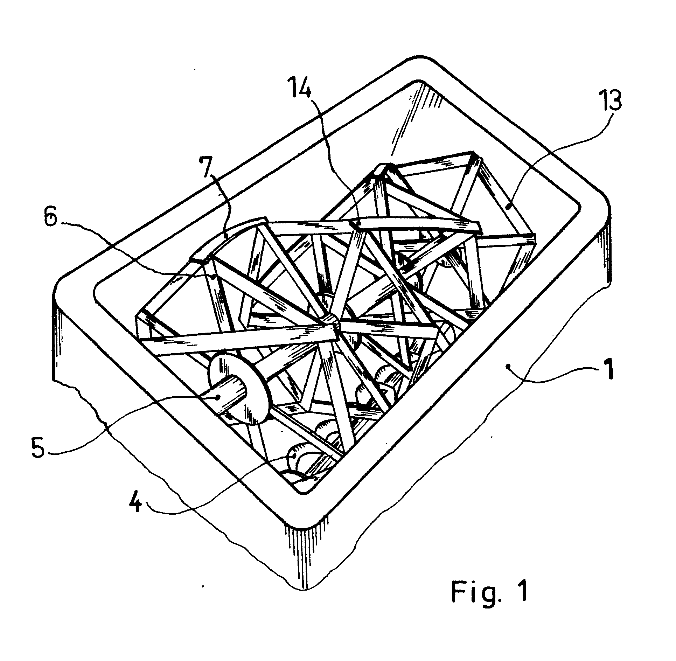

Fig. 1 perspektivisch und teilweise geschnitten eine Ansicht des erfindungsgemäßen Mischgerätes,

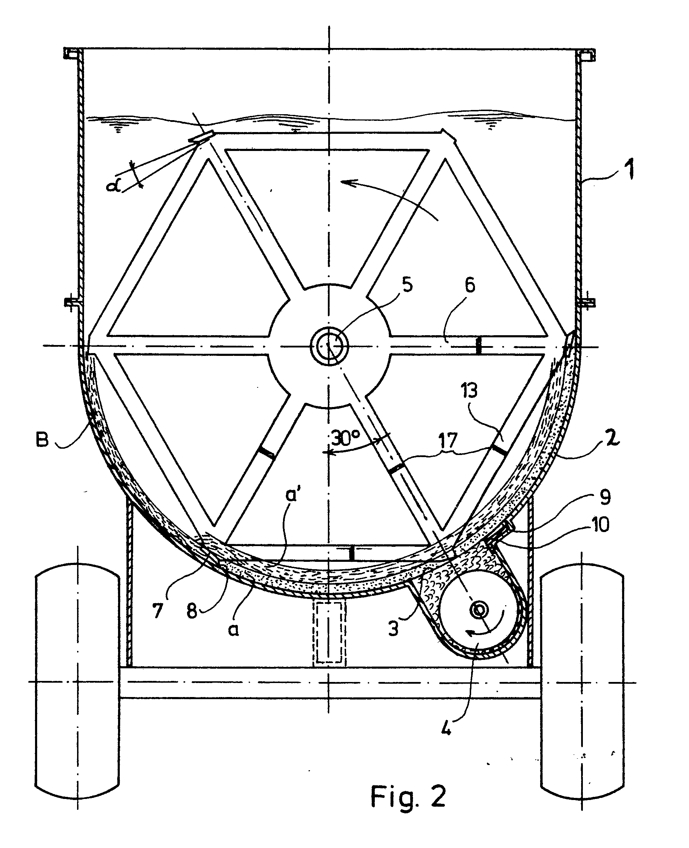

Fig. 2 in gegenüber Fig. 1 vergrößertem Maßstab einen Querschnitt durch das Gerät,

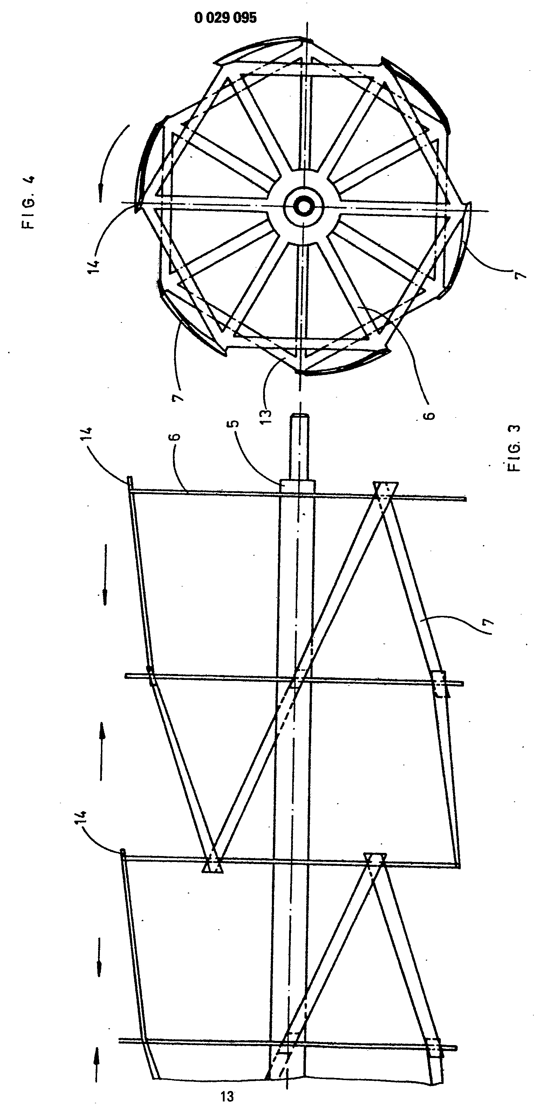

Fig. 3 schematisch die Anordnung der Mitnehmer oder messerartigen Streifen,

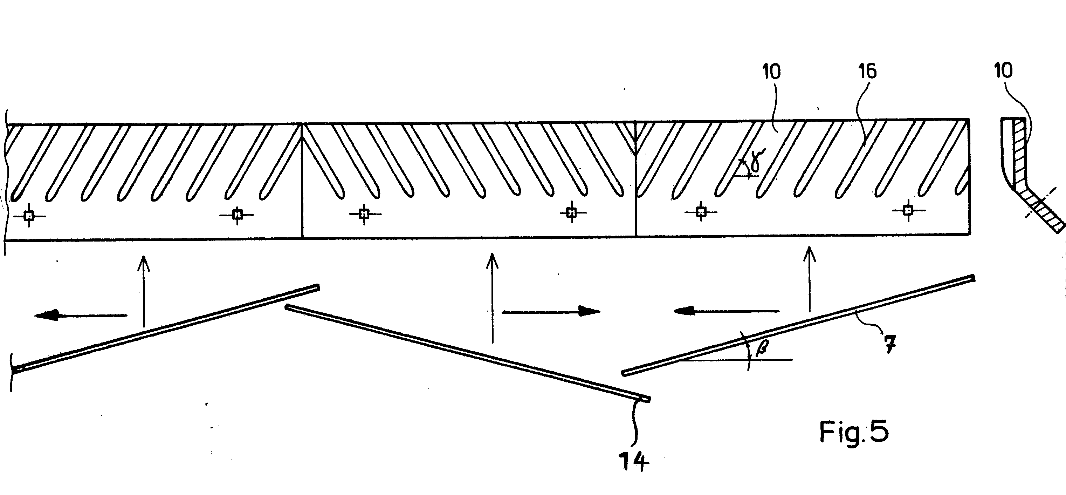

Fig. 4 eine Seitenansicht der Anordnung gemäß Fig. 3,

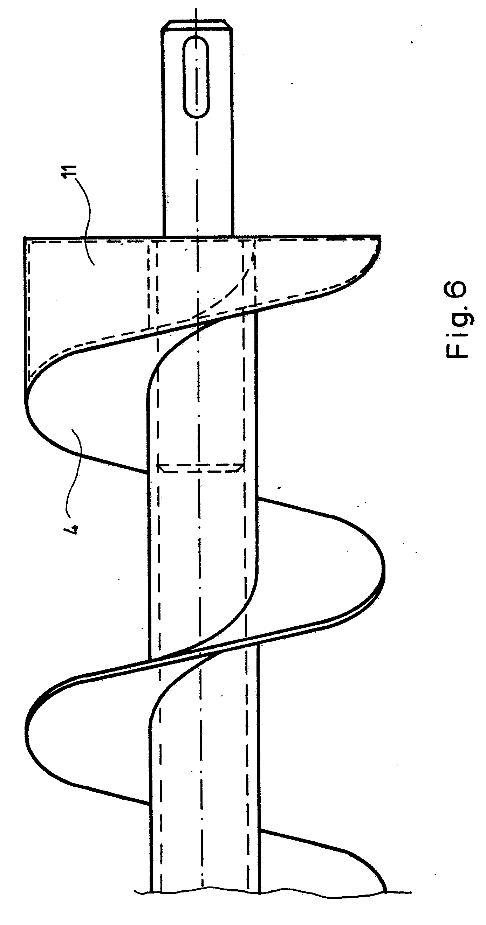

Fig. 5 eine Draufsicht auf die Schnitt- oder Schlagleiste gemäß Fig. 2 und

Fig. 6 eine Draufsicht auf das nicht aus dem Mischtrog herausragende Ende der Förderschnecke.

Das erfindungsgemäße Mischgerät besteht aus einem Mischtrog 1 mit einem halbkreisförmigen Boden 2, in welchem eine Welle 5 mit einem Mischorgan rotiert, welche zu dem Boden 2 koaxial verläuft. Die Welle 5 wird über nicht gezeigte Antriebsmittel in Rotation versetzt, diese Antriebsmittel sind dem Fachmann geläufig, z. B. ein Ketten-Zahnradantrieb und ein zugehöriger Motor, und brauchen daher nicht näher beschrieben zu werden.

Über eine spaltförmige Öffnung 3, welche sich in axialer Richtung annähernd über die Länge des Mischtroges 1 erstreckt und unter einem Winkel von ca. 30° in Drehrichtung des Umwälzmittels in bezug auf die vertikale Projektion der Welle 5 versetzt angeordnet ist, steht dieser mit einer Förderschnecke 4 in Verbindung. Ein Ende der Schnecke 4 ist aus dem Mischtrog 1 herausgeführt, wobei sich unter dem herausgeführten Ende der Schnecke 4 weitere Mischungs-Verteilungsmittel, z. B. ein Förderband, befindet. Die Schnecke 4 wird über ebenfalls für den Fachmann geläufige Antriebsmittel angetrieben, wobei dieser Antrieb ein Wendegetriebe aufweisen kann, so daß die Schnecke sowohl rechts- als auch linksherum in Rotation versetzt werden kann. An dem im Mischtrog 1 befindlichen Ende der Förderschnecke 4 ist der letzte halbe Gang durch eine Auswurfplatte 11 abgedeckt. Diese kann beispielsweise dreieckig zulaufen und entsprechend dem Umfang der Schnecke gebogen sein.

Während des Mischvorganges erhält die Förderschnecke 4 eine Drehrichtung, die eine Förderung des Gutes in ihrem Bereich auf das im Mischtrog 1 befindliche Ende zu bewirkt. Dabei wift die Auswurfplatte 11 das zu ihr geförderte Gut in den Mischbereich aus. Dadurch wird sichergestellt, daß das zu mischende Gut durch gegebenenfalls mehrfache Umwälzung im Mischbereich vollkommen durchmischt wird. Nach Beendigung des Mischvorganges wird sodann das Wendegetriebe umgesteuert, und die Schnecke 4 erhält eine Drehrichtung, bei welcher das fertiggemischte Gut aus dem Mischtrog 1 herausgeführt wird.

Für den Fall, daß auf das Wendegetriebe verzichtet wird, hat es sich als ebenfalls vorteilhaft erwiesen, das im Schneckenbereich befindliche Gut durch die Förderschnecke 4 permanent herausfördern zu lassen und in den Mischtrog zu recirkulieren. Dies kann z. B. mit Hilfe einer an sich bekannten Steigschnecke am aus dem Mischtrog 1 herausgeführten Ende der Förderschnecke 4 erfolgen.

Die Welle 5 ist mit einem Mischorgan bestückt, welches in Abständen radial verlaufende Streben 6 aufweist, von denen einige an ihrer Peripherie mit messerartigen Streifen 7 ausgerüstet sind. Diese verlaufen im wesentlichen in Längsrichtung des Mischtroges 1. Die messerartigen Streifen 7 weisen einen Abstand zur Welle 5 auf, der nur wenig geringer ist als der Abstand der Welle 5 zum halbkreisförmigen Boden 2 des Mischtroges 1. Dadurch ist gewährleistet, daß sich die messerartigen Streifen 7 in unmittelbar dichtem Abstand entlang dem halbkreisförmigen Trogboden 2 bewegen und infolgedessen der Bereich innerhalb von deren Umlaufbahn nicht bewegt wird.

Die äußeren Enden der nach Art von Radspeichen radial verlaufenden Streben 6 sind untereinander durch vorzugsweise in Kreissehnenrichtung verlaufende Streben 13 verbunden, wodurch ein stabiles Befestigungssystem für die messerartigen Streifen 7 gebildet wird. Die in Drehrichtung vorn liegenden Kanten der Streben 6 und 13 sind angeschärft, d. h. mit einer Schneidkante 17 versehen, und üben dadurch keine wesentliche Kraft auf die in dem Trog befindliche ruhende Masse des Gutes aus. Es wird dadurch vorteilhaft verhindert, daß sich diese Gut-Masse mitdreht. Denn dadurch würde eine Durchmischung derselben verhindert werden oder sehr unzulänglich ausfallen.

Es ist nämlich erfindungswesentlich, daß jeweils nur eine definierte schmale Außenzone des Gutes mischungsmäßig bewegt und abgeschält wird, welche dann durch die Öffnung 3 in die Schnecke eingetragen wird. Die »Abschälung« durch die messerartigen Streifen 7 ermöglicht es, daß aus der nahezu unbewegten Hauptmasse des Gutes unter Schwerkrafteinfluß neues, zu mischendes Gut nachrutscht. Dadurch ist es möglich, mit sehr geringem Energieaufwand zu einer letztendendes homogenen Mischung zu gelangen, da jeweils nur eine begrenzte Teilmenge des Mischgutes, diese aber um so intensiver, in Bewegung gesetzt und dadurch bearbeitet wird. Durch das Nachrutschen des zu mischenden Gutes ist weiterhin gewährleistet, daß ohne Ausnahme alle Teile des zu mischenden Gutes dem Mischprozeß unterworfen werden.

Die messerartigen Streifen 7 verlaufen unter einem geringen Winkel $\beta$ zur Längsachse des Mischtroges 1, wobei nebeneinander angeordnete Streifen 7 vorzugsweise einen jeweils entgegengesetzten Winkel $\beta$ zur Längsachse bilden.

Durch diese Anstellung im Winkel $\beta$ zur Längsachse und eine weitere Anstellung um den Winkel $\alpha$ zur Tangente ihrer Kreisbahn schälen die messerartigen Streifen nicht nur Teile des zu mischenden Gutes ab, sondern bringen es auch von den Wänden des Mischtroges 1 nach innen, wodurch der Effekt des Mischprozesses sehr begünstigt wird.

Die messerartigen Streifen 7 sind weiterhin derart verbunden, daß sie innerhalb eines Zylindermantels koaxial zur Welle 5 umlaufen. Sie sind gegenüber der Mantellinie dieses Zylindermantels um den Winkel $\alpha$ angestellt. Dieser kann z. B. 15° betragen, wobei die Breite der messerartigen Streifen in Bewegungsrichtung 4 cm und ihre Dicke maximal 1 cm beträgt.

Um mit Sicherheit eine Rotation der im wesentlichen ruhenden Masse des Mischgutes zu vermeiden und nur einen eng begrenzten Zerteilungs- und Mischbereich im Arbeitsbereich der Streifen 7 zu erhalten, sind die jeweils gleichartig angeordneten Streifen 7 eines Abschnittes um 120° gegeneinander versetzt. Am Umfang verteilt sind infolgedessen nur drei Streifen 7 vorhanden. Dieser Versatz ist abhängig von dem Durchmesser des Mischorganes und von der Anzahl der Streifen 7.

Zur Verringerung der Energieaufnahme und zur Verbesserung der Zerteilung von Klumpen sowie zum Schnitzeln von Rüben, Kartoffeln, Möhren u. a. Zutaten, weisen die messerartigen Streifen 7 an ihrer in Drehrichtung vorderen Kante eine als Schneide ausgebildete Anschrägung 8 auf, die von innen nach vorn außen verläuft.

Zur Erhöhung der Schneid- und/oder Schnitzelwirkung weist die in Drehrichtung der Streifen 7 hinten liegende Kante 9 der Öffnung 3 ein Messer oder eine Schlagleiste 10 auf. Durch die zur Längsachse des Mischtroges 1 schräge Anordnung der messerartigen Streifen 7 wird im Zusammenwirken mit der zur Öffnung 3 hinweisenden Kante der Schlagleiste 10 ein Schneideffekt erzielt, welcher auch zähe und harte Bestandteile zu zerkleinern vermag.

Die schräge Anordnung gewährleistet weiterhin eine gewisse axiale Bewegung des Gutes, so daß neben einer radialen Mischbewegung auch eine Vergleichmäßigung des Gutes über die Längsachse des Mischtroges 1 erfolgt.

Für den Fachmann überraschend hat sich dabei gezeigt, daß bei einem Mischtroginhalt von z. B. einer Tonne selbst kleine Mengen zugegebener Komponenten im Bereich von 10 bis 20 kg in kürzester Zeit, z. B. in 5 min, vollkommen gleichmäßig zerteilt werden. Darüber hinaus gelingt die Homogenisierung der Mischung mit einem sehr hohen Anteil von zähem bzw. hartem siliertem Corn Cob.

Darüber hinaus ist eine Mischung auch üblicher anderer Silage, z. B. der gehäckselten Maispflanzen mit dem Gerät nach der Erfindung möglich.

Eine Schlagleiste 10 weist eine Riffelung 16 auf, die unter einem Winkel $\gamma$ zur Trommellängsachse angeordnet ist, welche größer ist als der Anstellwinkel $\beta$ der messerartigen Streifen 7 und wobei entsprechend der Anordnung der Streifen 7 die Riffelung 16 nebeneinander angeordneter Schlagleisten 10 einen jeweils entgegengesetzten Winkel $\gamma$ zur Trommellängsachse bilden.

Jeder der messerartigen Streifen 7 ist einer Schlagleiste 10 zugeordnet, wobei die Riffelung 16 sowohl hinsichtlich der Umfangsrichtung als auch der Längsrichtung des Mischtroges 1 schräg verlaufen, wobei die Schräglage einer Schlagseite 10 in die gleiche Richtung weist, wie diejenige des damit zusammenwirkenden messerartigen Streifen 7. Der Winkel $\gamma$ ist jedoch größer als der Winkel $\beta$, wodurch gewährleistet ist, daß durch die relative Bewegung zwischen Schlagleiste 10 und messerartigem Streifen 7 während des Umlaufes eine Schneidwirkung unter dem günstigsten Winkel der Schneidenpaare gegeben ist.

Um die Seitenwände bzw. Wandbereiche des Mischtrogs 1 voll in den Mischprozeß einzubeziehen, weisen die messerartigen Streifen 7 über die radialen Streben 6 hinweg überstehende Enden 14 auf.

Der Mischvorgang erfolgt nach Eingabe des zu mischenden Gutes während sowohl die Förderschnecke 4 in einer der Förderrichtung entgegengesetzten Richtung umläuft und die messerartigen Streifen 7 durch das Haufwerk des zu mischenden Gutes bewegt werden. Die Füllung des Mischtroges 1 kann dabei so sein, daß die Streifen 7 während des Umlaufes nicht aus der Masse des Gutes austreten.

Die Mischungsqualität hat sich aber auch als gleichwertig erwiesen, wenn die Füllung geringer war und die messerartigen Streifen 7 aus der Masse austraten.

Die Förderschnecke 4 ist vorzugsweise während des Mischvorganges in der genannten Art im Betrieb. Nach erfolgtem Abschluß des Mischprozesses, während die messerartigen Streifen 7 weiterhin umlaufen, wird die Förderschnecke umgesteuert und die fertige Mischung ausgetragen. Dabei ist ein vollständiger Austrag dadurch gewährleistet, daß die Schneidkanten 8 der Streifen 7 im Bereich des Bodens 2 befindliche Reste des Gutes durch die Öffnung 3 in den Trog der Schnecke 4 fördern.

Die Energieaufnahme für die Rotation der messerartigen Streifen 7 ist relativ gering und ihre Zerkleinerungsfunktion für das zu mischende Gut außerordentlich wirkungsvoll und für den Fachmann überraschend. Es ist infolgedessen auch möglich, die zu mischende Masse des Gutes vor oder nach der Mischung z. B. über Nacht im Mischtrog 1 stehen zu lassen, ohne daß der erneute Anlauf der messerartigen Streifen 7 durch das unvermeidliche Zusammenbacken des Gutes behindert würde. Dies ist ein gerade in der Landwirtschaft bei bäuerlichen Betrieben unerhört vorteilhafter Effekt der erfindungsgemäß ausgestalteten Vorrichtung.

Da das Mischgerät ohne größere Motoren für seinen Antrieb auskommt, kann es besonders leicht gebaut sein. Es kann daher auch ohne Probleme mit einem normalen Landwirtschafts-Traktor transportiert werden oder als Einachs-Anhänger ausgebildet sein.

Erstmalig wird mit der Mischvorrichtung nach der Erfindung eine sehr wirtschaftliche und Problemlose Erzeugung von Cob-Corn-Mix-Mischungen in ausreichendem Maße ermöglicht.

Die Mischvorrichtung nach der Erfindung gestattet damit eine sehr vorteilhafte Verbesserung der natürlichen Eiweißversorgung im Bereich der Futtermast in der Landwirtschaft.

Dabei ist der Mischer auch anderweitig geeignet, in universeller Weise zum Mischen sonstiger Komponenten und Mischungen beispielsweise aus Silagen, Trockenfutter oder dergleichen eingesetzt zu werden.

**Patentansprüche**

1. Verfahren zum Mischen für insbesondere zähes, zur Klumpenbildung neigendes Mischgut in einem Mischtrog (1), in welchem ein Mischorgan mit horizontaler Achse umläuft, wobei das Mischgut unter Schwerkrafteinfluß in einen mit dem Mischtrog (1) annähernd parallel und der Länge nach in Verbindung stehenden Trog einer mit dem Mischorgan zusammenwirkenden Schnecke (4), eingetragen wird, die eine im wesentlichen axiale Förderung des eingetragenen Gutes bewirkt, worauf das Gut am Ende der Förderung erneut in den Mischbereich eingetragen wird, und die Schnecke (4) nach Beendigung des Mischvorganges die fertige Mischung aus dem Mischtrog herausfördert, dadurch gekennzeichnet, daß von dem annähernd in einer Ruhelage befindlichen Mischgut jeweils nur eine wandnahe, äußere Schicht geringer Dicke im unteren Bereich des Mischtroges (1), auf einer kreisförmigen Bahn mittels eines messerartigen Streifens (7), bewegt, abgeschält und in den Trog der Schnecke (4) eingetragen wird, wobei jeweils sich in Ruhelage befindliches Mischgut in den vom abgescherten Mischgut frei gewordenen Bereich absinkt.

2. Verfahren nach Anspruch 1, dadurch gekennzeichnet, daß das in den Trog der Schnecke (4), eingetragene Gut beim Mischvorgang in Richtung auf das im Mischtrog (1) befindliche Ende der Schnecke (4) gefördert und dort in den Mischerbereich ausgeworfen wird.

3. Verfahren nach Anspruch 1, dadurch gekennzeichnet, daß das in den Trog der Schnecke (4) eingetragene Gut während des Mischvorganges durch die Schnecke (4) laufend aus dem Mischtrog herausgefördert wird und daß das herausgeförderte Gut gehoben und von oben wieder in den Mischtrog (1), eingefüllt wird.

4. Vorrichtung zur Durchführung des Mischverfahrens nach einem der Ansprüche 1 bis 3, mit einem Mischtrog (1), und einem darin mit horizontaler Achse umlaufenden Mischorgan, wobei der Bodenbereich des Mischtroges (1) eine über seine Länge verlaufende Öffnung (3) aufweist, durch die der Mischtrog (1), mit einer zu diesem parallel angeordneten Förderschnecke (4), in Verbindung steht, dadurch gekennzeichnet, daß das Mischorgan im wesentlichen aus messerartigen schmalen Streifen (7) zum Abscheren wandnaher äußerer Schichten gebildet wird, die in Richtung annähernd parallel zur Achse des Mischtroges (1) oder in einer geringen Schrägstellung zu dieser angeordnet sind, und daß an der Schnecke (4) oder zusätzlich zu dieser Mittel vorgesehen sind, die das Mischgut nach Förderung zum Ende der Schnecke (4) aus dem Schneckentrog in den Mischertrog (1) zurückfördern.

5. Vorrichtung nach Anspruch 4, dadurch gekennzeichnet, daß die messerartigen Streifen (7) gegenüber einer Mantellinie eines bei ihrer Rotation um die Welle (5) beschriebenen Zylindermantels um einen Winkel ($\alpha$) angestellt sind und in ihrer Längserstreckung gegenüber der Längsachse des Mischtroges (1) eine Schrägstellung um einen Winkel ($\beta$) aufweisen.

6. Vorrichtung nach einem der Ansprüche 4 oder 5, dadurch gekennzeichnet, daß jeweils gleichartig angeordnete messerartige Streifen (7) eines Abschnittes um 120° gegeneinander versetzt angeordnet sind.

7. Vorrichtung nach einem der Ansprüche 4 bis 6, dadurch gekennzeichnet, daß die messerartigen Streifen (7) an ihrer in Drehrichtung vorderen Kante eine Anschrägung (8) aufweisen, die eine Schneidkante bildend von innen nach vorn außen verläuft.

8. Vorrichtung nach einem der Ansprüche 4 bis 7, dadurch gekennzeichnet, daß die Öffnung (3) um ca. 30° in Drehrichtung der messerartigen Streifen (7) gegenüber der vertikalen Projektion der Welle (5) versetzt ist.

9. Vorrichtung nach einem der Ansprüche 4 bis 8, dadurch gekennzeichnet, daß an der in Drehrichtung der messerartigen Streifen (7) hinten liegenden Kante (9) der Öffnung (3) eine messerförmige Riffel- oder Schlagleiste (10) angeordnet ist.

10. Vorrichtung nach einem der Ansprüche 4 bis 9, dadurch gekennzeichnet, daß der Antrieb der Schnecke (4) ein Wendegetriebe zur Drehrichtungsumsteuerung aufweist und daß das im Mischtrog (1) befindliche Ende der Schnecke (4) eine Auswurfplatte (11) aufweist, die vorzugsweise den letzten halben Schneckengang abdeckt.

## Claims

1. A method of mixing a particularly viscous mixed material, having a tendency for the formation of lumps, within a mxing trough (1) within which a mixing element rotates that has a horizontal axis, wherein the mixed material is fed under gravity action into a trough, communicating approximately in parallel and acrosss the length with the mixing trough (1), of a screw or worm (4) which cooperates with the mixing element and which acts to convey the fed material substantially in axial direction, whereupon the material is re-introduced into the mixing zone at the end of the conveying process, and wherein the screw (4) discharges the final mixture from the mixing trough upon termination of the mixing process, characterized in that from the mixed material being substantially in a stationary or steady state, only an outer layer each of small thickness adjacent to the wall in the lower portion of the mixing trough (1) is moved in a circular path stripped off and introduced into the trough of the screw (4) by means of a blade-like strip (7), with the mixed material in its steady state descending into the region from which the sheared off or stripped off mixed material has been removed.

2. The method according to claim 1, characterized in that the material introduced into the trough of the screw (4) is conveyed during the mixing process towards the end of the screw (4) located within the mixing trough (1), and discharged into the region of the mixer at this point.

3. The method according to claim 1, characterized in that the material introduced into the trough of the screw (4) is continuously discharged from the mixing trough by the screw (4) during the mixing process, and that the discharged material is moved upwards and re-charged into the mixing trough (1) from above.

4. Apparatus for carrying out the mixing method according to any one of claims 1 to 3, comprising a mixing trough (1) and a mixing element rotating within said trough about a horizontal axis, with the bottom portion of the mixing trough (1) including an opening (3) which extends across the length of said trough and through which the mixing trough (1) communicates with a conveyor screw or worm (4) extending in parallel therewith, characterized in that said mixing element is formed essentially of blade-like, narrow strips (7) for shearing off outer layers adjacent to walls, which strips are arranged in a direction approximately parallel to the axis of the mixing trough (1) or with a slight inclination thereto, and that means are adapted to refeed the mixed material from the screw trough into the mixer trough (1) upon conveyance of the material to the end of the screw (4).

5. The apparatus according to claim 4, characterized in that the blade-like strips (7) are inclined under an angle (α) with respect to the generatrix of a cylindrical surface described by their rotation around the shaft (5), and have an obliquity in their longitudinal dimension by an angle (β) relative to the longitudinal axis of the mixing trough (1).

6. The apparatus according to any one of claims 4 or 5, characterized in that similarly positioned blade-like strips (7) of one section are staggered or displaced relative to each other by 120°.

7. The apparatus according to any one of claims 4 to 6, characterized in that the blade-like strips (7) include at the leading edge, as seen in the direction of rotation, a bevel which extends from the inner side to the outer front side thereby defining a cutting edge.

8. The apparatus according to any one of claims 4 to 7, characterized in that opening (3) is displaced by about 30° in the direction of rotation of the blade-like strips (7) relative to the vertical projection of the shaft (5).

9. The apparatus according to any one of claims 4 to 8, characterized in that the trailing edge (9), as seen in the direction of rotation of the blade-like strips (7), of the opening (3) has disposed thereon a knifeshaped channeled or striker bar (10).

10. The apparatus according to any one of claims 4 to 9, characterized in that the drive mechanism of the screw (4) includes a reversing gear for reversal of direction of rotation, and that the end of the screw (4) positioned within the mixing trough (1) includes an ejector plate (11) which encloses or shrouds preferably one half of the final screw thread.

## Revendications

1. Procédé pour mélanger un produit mixte, notamment visqueux, ayant tendance à former des grumeaux, dans un auget mélangeur (1) dans lequel tourne in organe mélangeur à axe horizontal, le produit mixte étant introduit sous l'influence de la gravité dans un auget, approximativement parallèle à l'auget mélangeur (1) et relié à celui-ci sur sa longueur, d'une vis sans fin (4) coopérant avec l'organe mélangeur et assurant un transport essentiellement axial du produit introduit qui est amené, à la fin du transport, à nouveau dans la zone de mélange, la vis sans fin évacuant le mélange final de l'auget mélangeur (1) après terminaison de l'opération de mélange, caractérisé en ce que parmi le produit mixte se trouvant approximativement dans une position de repos, respectivement seulement une couche extérieure proche de la paroi et de faible épaisseur est déplacée dans une zone inférieure de l'auget mélangeur (1) sur une voie de forme circulaire à l'intérieur d'une bande en forme de lame (7), elle est décollée et elle est introduite dans l'auget de la vis sans fin (4), le produit mixte se trouvant dans la position de repos tombant à chaque fois dans la zone qui a été libérée par le produit mixte découpé.

2. Procédé selon la revendication 1, caractérisé en ce que le produit introduit dans l'auget de la vis sans fin (4) est entraîné, dans le processus de mélange, en direction de l'extrémité de la vis sans fin (4) située dans l'auget mélangeur (1) et est éjecté dans la zone mélangeuse.

3. Procédé selon la revendication 1, caractérisé en ce que le produit introduit dans l'auget de la vis sans fin (4) est éjecté de façon continue hors de l'auget mélangeur par la vis sans fin (4) pendant le processus de mélange et en ce que le produit éjecté est soulevé et est ensuite réintroduit par le haut dans l'auget mélangeur (1).

4. Dispositif pour la mise en oeuvre du procédé de mélange selon l'une quelconque des revendications 1 à 3, comportant un auget mélangeur (1) et un organe mélangeur tournant dans celui-ci avec un axe horizontal, la zone de fond de l'auget mélangeur (1) étant pourvue d'une ouverture (3) s'étendant sur sa longueur et par laquelle l'auget mélangeur (1) est relié à une vis transporteuse sans fin (4) disposée parallèlement à celui-ci, caractérisé en ce que l'organe mélangeur est constitué essentiellement par des bandes étroites (7) en forme de lames servant à découper des couches extérieures proches de la paroi, qui sont orientées approximativement parallèlement à l'axe de l'auget mélangeur (1), ou bien qui sont légèrement inclinées par rapport à celui-ci, et en ce qu'il est prévu sur la vis sans fin (4), et additionellement à celle-ci, des moyens qui assurent, après le transport du produit mixte jusqu'à l'extrémité de la vis sans fin (4), son retour de l'auget de vis sans fin dans l'auget mélangeur (1).

5. Dispositif selon la revendication 4, caractérisé en ce que les bandes (7) en forme de lames sont inclinées d'un angle ($\alpha$) par rapport à une génératrice d'une enveloppe cylindrique décrite au cours de leur rotation (5) autor de l'arbre (5) et ont une orientation longitudinale qui est inclinée d'un angle ($\beta$) par rapport à l'axe longitudinal de l'auget mélangeur (1).

6. Dispositif selon la revendication 4 ou 5, caractérisé en ce que des bandes en forme de lames (7) disposées de la même façon dans chaque section sont décalées entre elles de 120°.

7. Dispositif selon l'une quelconque des revendications 4 à 6, caractérisé en ce que les bandes (7) en forme de lames comportent, sur leur bord avant, dans le sens de rotation, un chanfrein (8) qui est orienté de l'intérieur vers l'avant et l'extérieur en formant une arête de coupe.

8. Dispositif selon l'une quelconque des revendications 4 à 7, caractérisé en ce que l'ouverture (3) est décalée d'environ 30° dans le sens de rotation des bandes (7) en forme de lames par rapport à la projection verticale de l'arbre (5).

9. Dispositif selon l'une quelconque des revendications 4 à 8, caractérisé en ce qu'il est prévu, sur le bord (9) de l'ouverture, qui est placé en arrière dans le sens de rotation des bandes (7) en forme de lames, un rebord cannelé ou de percussion en forme de couteau (10).

10. Dispositif selon l'une quelconque des revendications 4 à 9, caractérisé en ce que l'entraînement de la vis sans fin (4) comporte une transmission réversible pour inverser le sens de rotation, et en ce que l'extrémité de la vis sans fin (4) située dans l'auget mélangeur (1) comporte une plaque d'éjection (11) qui recouvre de préférence la dernière moitié du filet de vis sans fin.

Fig. 1

Fig. 2

FIG. 4

14

0 029 095

13

14

6

5

13

7

14

7

6

7

FIG. 3

Fig.5

Fig. 6

0 029 095